Europäisches Patentamt

European Patent Office

Office européen des brevets

(19)

(11) Veröffentlichungsnummer: **0 062 258**
**B1**

(12) EUROPÄISCHE PATENTSCHRIFT

(45) Veröffentlichungstag der Patentschrift:
22.05.85

(51) Int. Cl.⁴: **C 02 F 1/42,** B 01 J 47/02

(21) Anmeldenummer: **82102553.3**

(22) Anmeldetag: **26.03.82**

(54) Filtervorrichtung zum Enthärten und/oder Vollentsalzen von Wasser.

(30) Priorität: **03.04.81 DE 3113622**

(43) Veröffentlichungstag der Anmeldung:
**13.10.82 Patentblatt 82/41**

(45) Bekanntmachung des Hinweises auf die Patenterteilung:
**22.05.85 Patentblatt 85/21**

(84) Benannte Vertragsstaaten:
**AT CH FR GB IT LI NL**

(56) Entgegenhaltungen:
**BE - A - 342 756**
**DE - C - 418 493**
**GB - A - 626 903**
**US - A - 3 307 581**

(73) Patentinhaber: **Herrmann, Willy, Hagäcker 70,
D-7151 Affalterbach-Wolfsölden (DE)**

(72) Erfinder: **Herrmann, Willy, Hagäcker 70,
D-7151 Affalterbach-Wolfsölden (DE)**

(74) Vertreter: **Becker, Maria, Dipl.-Phys., Auf dem Haigst 29,
D-7000 Stuttgart 70 (DE)**

**Beschreibung**

Die Erfindung betrifft eine Filtervorrichtung zum Behandeln von Rohwasser mit einem mit einem Filtermedium gefüllten und von dem zu behandelnden Wasser durchflossenen Behälter, der eine Zuflussöffnung und eine an der Behälteroberseite liegende Abflussöffnung aufweist, mit einem sich im Innern des Behälters von oben nach unten erstreckenden und im Abstand zu dessen Boden endenden Abschirmrohr und mit einem in diesem koaxial und mit radialem Abstand angeordneten hohlzylindrischen, über seine Länge radial durchlässigen Filterorgan, dessen Innenraum einerseits mit der Abflussöffnung zum Ableiten von gereinigtem Wasser verbunden ist und dessen freies Ende sich innerhalb des unteren, durchlässig ausgebildeten Abschirmrohrendstückes befindet.

Eine Filtervorrichtung dieses Aufbaues ist bereits bekannt (DE-C-418 493).

Bei dieser Filtervorrichtung ist der Behälter teilweise mit Filtermaterial verschiedener Körnung angefüllt, wobei grosskörniges Filtermaterial ganz unten aufliegt und über diesem mehrere Schichten mit immer feinerer Körnung liegen.

Das das Filterorgan aufnehmende, in das Filtermedium hineinragende Abschirmrohr ist dabei sowohl an seiner unteren Stirnwand als auch im unteren Endbereich seines Mantels perforiert.

Im Betrieb dieser Filtervorrichtung kann somit die zu filtrierende Flüssigkeit axial und bereichsweise auch radial von unten her in das Abschirmrohr eindringen.

Eine solche Filtervorrichtung arbeitet zuverlässig, sofern aus der Flüssigkeit diese verunreinigten Teilchen herauszufiltern sind, wobei sowohl die durchlässige untere Stirnwand als auch der radial durchlässige Endbereich des Abschirmrohres zugleich die Wirkung eines dem Filterorgan vorgeschalteten Vorfilters haben.

Eine solche Filtervorrichtung wäre für Ionenaustauscherzwecke nicht einzusetzen, weil es in diesem Falle unabdingbare Voraussetzung ist, dass das zu behandelnde Rohwasser die gesamte Ionenaustauschermasse gleichmässig durchströmen muss und dies allein schon wegen der bereichsweise radialen Durchlässigkeit des Aufnahmerohres nicht möglich ist.

Dabei wäre bei jeder radialen Einzelperforierung des Aufnahmeraumes, bedingt durch den Einfluss von Schwerkraft und Strömung auf die gleichmässige feinkörnige Austauschermasse, eine sich progressiv verstärkende Brückenbildung nicht zu vermeiden, wodurch sich ein entsprechend erhöhender Durchflusswiderstand aufbauen würde.

Eine solche Vorrichtung wäre deshalb bereits nach kurzer Betriebszeit nur noch in Teillastbereichen zu betreiben.

Die gleichen Nachteile liegen bei einer Filtervorrichtung gemäss BE-A-342 756 vor, bei der zu filtrierendes Rohwasser ein aus Sand bestehendes Filterbett durchströmen und über die gesamte axiale Länge radial das Filterorgan durchdringen kann.

Der Erfindung liegt von daher die Aufgabe zugrunde, eine Filtervorrichtung der eingangs erläuterten Art anzugeben, die zum Enthärten und/oder Vollentsalzen als Ionenaustauscher zu betreiben ist.

Diese Aufgabe wird erfindungsgemäss dadurch gelöst, dass das Filtermedium Ionenaustauschermasse ist und dass das Abschirmrohr lediglich an seinem unteren Stirnende offen ist.

Bei dieser Filtervorrichtung ist das Rohwasser gezwungen, die Ionenaustauschermasse vollständig zu durchströmen, indem das Abschirmrohr lediglich an seinem unteren Stirnende offen ist und sich das untere Ende des radial durchlässigen Filterorgans innerhalb des unteren Abschirmrohrendstückes befindet.

Dadurch ist sichergestellt, dass sich kein Durchflusswiderstand aufbauen kann und die Ionenaustauschermasse nur in ganz geringem Umfang in den Zwischenraum zwischen dem Filterorgan und der Wandung des Aufnahmerohres eintreten kann. Somit wird auch an dem hinter der offenen Stelle des Aufnahmerohres liegenden Filterorgan für den Durchtritt des in das Abschirmrohr einströmenden Reinwassers der Durchflusswiderstand über längere Zeiträume so klein wie möglich gehalten.

Dies kommt dadurch zustande, dass sich die Steiggeschwindigkeit des zwischen Abschirmrohr und Filterorgan aufsteigenden Wassers, als Folge der gleichzeitigen radialen Durchdringung des Filterorganes nach innen, fortlaufend vermindert. Hierdurch wird erreicht, dass der Wasserstrom verhältnismässig wenig Ionenaustauschermasse in den Ringraum eintragen kann. Somit stellt sich dem Wasser bei der Durchströmung des Filterorgans in dessen oberem Teil nur der Widerstand entgegen, der ohne die zusätzliche Belastung von zu durchdringenden Feinharzen oder Harzabriebschichten entsteht.

Selbst in den tiefer liegenden, noch von eingetragenem Harz ausgefüllten Schichten ist der Durchflusswiderstand des Wassers durch das Filterorgan dadurch gemindert, dass die hier noch zu durchdringenden Harzschichten durch die Einwirkung des Abschirmrohres vom Schwerkraftdruck befreit sind. Zudem lassen sich bei einer Umkehrung des Wasserstromes die feinen Abriebteilchen wieder ausschwemmen.

Eine einfache und vorteilhafte Konstruktion des Filterorgans ergibt sich, wenn dieses in bekannter Weise ein am Umfang perforiertes, an seinem dem offenen Stirnende des Abschirmrohres zugekehrten Stirnende geschlossenes und zumindest im Eintrittsbereich der Flüssigkeit in das Abschirmrohr von einem Filterstrumpf umschlossenes Rohr aufweist.

Die zylindrische bzw. stabförmige Ausbildung des Filterorgans erlaubt es hierbei, mit diesem beim Durchfluss des Wassers durch das Filtermedium weitestgehend aus dem Bereich der Schwerkraft herauszukommen.

In weiterer vorteilhafter Ausgestaltung der Erfindung erstreckt sich der Mantel des Behälters über dessen Boden hinaus, und es ist insbesondere im Zentrum des Bodens eine verschliessbare Öffnung angeordnet.

In der Zeichnung ist ein Ausführungsbeispiel der erfindungsgemässen Filtervorrichtung dargestellt. Darin zeigen:

Fig. 1 einen Längsschnitt durch die Filtervorrichtung, die in verkürzter Darstellung gezeigt ist;

Fig. 2 ein Diagramm zur Veranschaulichung von Durchflussleistungen.

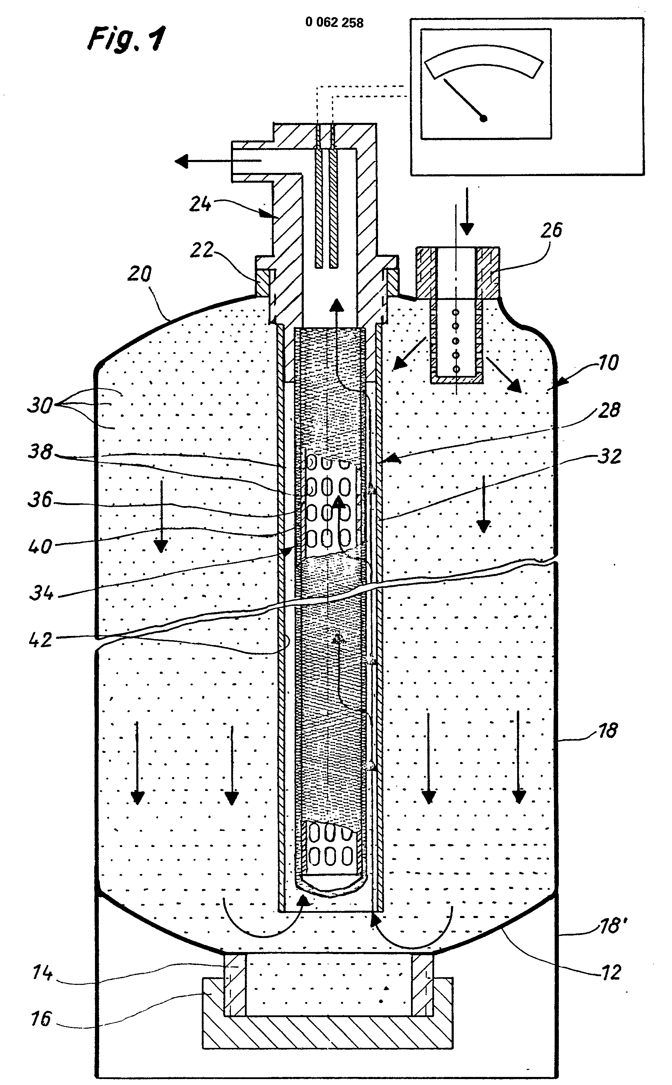

Die in Fig. 1 gezeigte Filtervorrichtung besitzt einen druckfesten, vorzugsweise zylindrischen Behälter 10. Dessen Boden ist mit 12 bezeichnet und besitzt in seinem zentralen Bereich einen Einfüll- und Entleerungsstutzen 14, der mittels einer auf diesen aufschraubbaren Verschlusskappe 16 verschliessbar ist. Mit 18 ist der Behältermantel bezeichnet, der an seinem unteren Ende ein sich über den Boden 12 hinaus erstreckendes Mantelteilstück 18' aufweist, das einen Behälter-Aufstellsockel bildet. Innerhalb dieses Aufstellsockels befindet sich der verschliessbare Einfüll- und Entleerungsstutzen.

Die obere Behälterstirnwand, die vorzugsweise nach aussen gewölbt ist, ist mit 20 bezeichnet. In deren zentralem Bereich ist ein sich nach oben erstreckender, ein Innengewinde aufweisender Einschraubstutzen 22 angeordnet. 24 bezeichnet als Ganzes einen Anschlussstutzen zum Anschliessen einer Flüssigkeitsabflussleitung. Neben diesem Anschlussstutzen ist an der Behälterstirnwand ein weiterer Anschlussstutzen 26 vorgesehen, an den eine Flüssigkeitszuführleitung anschliessbar ist.

Innerhalb des Behälters befindet sich als Ganzes ein Filtrationskörper 28. Dieser erstreckt sich vom Anschlussstutzen 24 bis in den Bereich des Behälterbodens 12. Er ist am inneren Ende des Anschlussstutzens 24 angeschlossen. Dieser Filtrationskörper ist von über den Einfüll- und Entleerungsstutzen 14 in den Behälter eingefüllter Ionenaustauschermasse 30 umschlossen, die beispielsweise aus feinkörnigem Kunstharz besteht.

Der Filtrationskörper 28 ist gebildet durch ein im Querschnitt kreisförmiges, zylindrisches Abschirmrohr 32, dessen Mantel geschlossen ist und damit an seinem oberen Stirnende am Anschlussstutzen 24 gehalten und durch diesen dicht verschlossen ist. Sein unteres Stirnende befindet sich im Bereich des Behälterbodens und ist offen. Innerhalb des Abschirmrohres weist der Filtrationskörper ein Filterorgan 34 auf, das sich im Radialabstand vom Innenumfang des Abschirmrohres bis in den Bereich dessen unteren Stirnendes erstreckt. Dieses Filterorgan ist durch ein kreiszylindrisches perforiertes Durchlassrohr 36 gebildet, dessen Mantel von Öffnungen 38 verhältnismässig grossen Querschnitts durchdrungen ist.

Das Durchlassrohr 36 ist an seinem unteren Stirnende verschlossen. 40 bezeichnet einen über das Durchlassrohr 36 gezogenen feinmaschigen Filterstrumpf, wobei das Durchlassrohr mit seinem oberen offenen Stirnende zusammen mit dem Filterstrumpf ebenso wie das Abschirmrohr 32, beispielsweise durch Kleben am Anschlussstutzen 24, gehalten ist. Abschirmrohr und Filterorgan definieren zwischen sich einen Ringkanal 42.

Am Anschlussstutzen 24 ist in bekannter Weise noch ein Messgerät zur Anzeige des elektrischen Leitwertes von die Filtervorrichtung verlassender gereinigter Flüssigkeit angebracht. Dieses Messgerät kann noch mit einem Grenzwertschalter kombiniert sein, welcher bei Erreichen eines vorher eingestellten Leitwerts ein optisches oder akustisches Signal erzeugt.

Die beschriebene Filtervorrichtung soll beispielsweise zur Herstellung vollentsalzten Wassers dienen. Das über den Anschlussstutzen 26 in den Behälter 10 eingeleitete Rohwasser kann aufgrund der erfindungsgemässen Ausbildung des Filtrationskörpers 28 erst dann das Filterorgan 34 beaufschlagen, wenn es zuvor die aus Ionenaustauschermasse 30 bestehende Behälterfüllung durchdrungen hat, wobei die im Wasser vorhandenen Ionen von der Ionenaustauschermasse aufgenommen und dafür andere Ionen an dieses abgegeben werden.

Nach Passieren des die Ionenaustauschermasse bildenden Kunstharzes tritt die Flüssigkeit in das untere offene Stirnende des Abschirmrohres 32 ein und beaufschlagt das Filterorgan 34 bzw. dessen Filterstrumpf 40 über dessen gesamte Länge, indem sie im Ringkanal 42 hochzusteigen und das Filterorgan in radialer Richtung zu durchdringen vermag, um danach über eine am Anschlussstutzen 24 angeschlossene Leitung aus der Filtervorrichtung gereinigt wieder abzufliessen.

Die beschriebene Ausbildung des Filtrationskörpers und dessen Anordnung im Behälter stellen sicher, dass Ionenaustauschermasse sich lediglich im unteren offenen Bereich des Abschirmrohres ansammeln, jedoch den Ringraum 42 nicht ausfüllen kann, so dass also die beaufschlagte Seite des Filterorgans 34 über ihren grössten Teil von Ionenaustauschermasse bzw. Abriebteilchen derselben frei bleibt und damit die Poren bzw. Maschen des Filterstrumpfes sowie die Öffnungen 38 des Durchlassrohres 36 unbelastet bleiben.

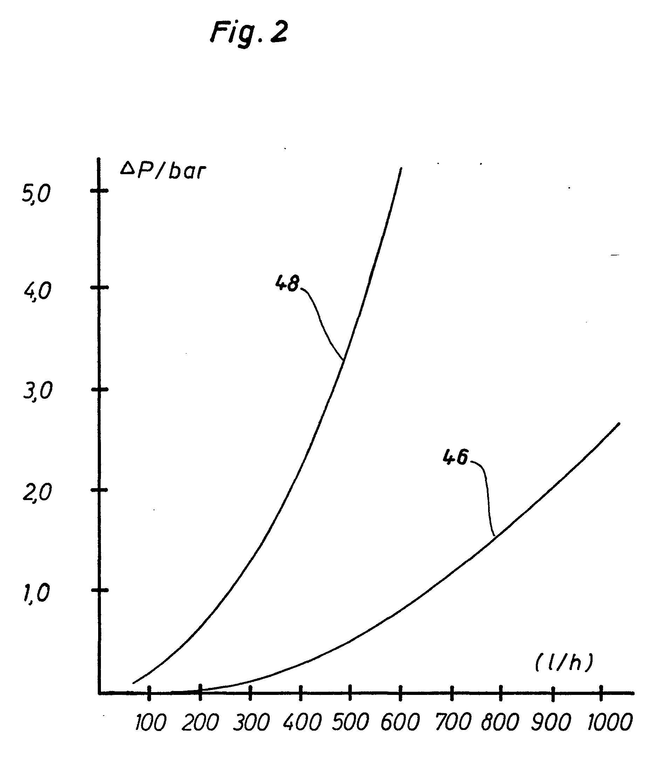

Das in Fig. 2 gezeigte Leistungsdiagramm veranschaulicht die Durchflussleistung der erfindungsgemässen Filtervorrichtung im Vergleich zu bekannten Vorrichtungen dieser Art bei einem Behältervolumen von 8 l. Hierbei bezeichnet 46 eine Kurve zur Darstellung der Durchflussleistung mit Hilfe einer erfindungsgemässen Filtervorrichtung, während eine Kurve 48 die Durchflussleistung bekannter Filtervorrichtungen bei gleichen Flüssigkeitsdrücken veranschaulicht.

Besonders bemerkenswert ist der verhältnismässig geringe Durchflusswiderstand angesichts der Tatsache, dass für die der Messung zugrundeliegenden Versuche sog. Einwegharze verwendet wurden, welche besonders feinkörnig sind und einen entsprechend hohen Anteil an Feinstabrieb besitzen.

## Patentansprüche

1. Filtervorrichtung zum Behandeln von Rohwasser, mit einem mit einem Filtermedium (30) gefüllten und von dem zu behandelnden Waser durchflossenen Behälter (10), der eine Zuflussöffnung (26) und eine an der Behälteroberseite liegende Abflussöffnung aufweist, mit einem sich im Innern des Behälters (10) von oben nach unten erstreckenden und im Abstand zu dessen Boden (12) endenden Abschirmrohr (32) und mit einem in diesem koaxial und mit radialem Abstand angeordneten hohlzylindrischen, über seine Länge radial durchlässigen Filterorgan (34), dessen Innenraum einerseits mit der Abflussöffnung zum Ableiten von gereinigtem Wasser verbunden ist und dessen freies Ende sich innerhalb des unteren, durchlässig ausgebildeten Abschirmrohrendstükkes befindet, dadurch gekennzeichnet, dass das Filtermedium Ionenaustauschermasse (30) ist und dass das Abschirmrohr (32) lediglich an seinem unteren Stirnende offen ist.

2. Filtervorrichtung nach Anspruch 1, dadurch gekennzeichnet, dass das Filterorgan (34) in bekannter Weise ein am Umfang perforiertes, an seinem dem offenen Stirnende des Abschirmrohres (32) zugekehrten Stirnende geschlossenes und zumindest im Eintrittsbereich der Flüssigkeit in das Abschirmrohr (32) von einem Filterstrumpf (40) umschlossenes Rohr (36) aufweist.

3. Filtervorrichtung nach Anspruch 1 oder 2, dadurch gekennzeichnet, dass der Mantel des Behälters (10) sich über dessen Boden (12) hinaus erstreckt und insbesondere im Zentrum des Bodens (12) eine verschliessbare Öffnung angeordnet ist.

**Claims**

1. Filter device for the treatment of untreated water, comprising a container (10) which is filled with a filtering medium (30) and through which the water to be treated flows, said container having an inflow opening (26) and located on the upper container face an outflow opening, comprising a shielding tube (32) extending downwardly within the container (10) and terminating at a distance from the bottom (12) of the latter, and comprising a hollow cylindrical filtering member (34) which is radially permeable throughout its length and is arranged in coaxial and radially spaced relationship within the shielding tube, the interior of the filtering member (34), on the one hand, being in communication with the outflow opening for the draining-off of purified water and the free end of the filtering member being located within the lower end portion of the shielding tube which is of permeable design, characterized in that the filtering medium is an ion exchanger compound (30), and in that the shielding tube (32) is open only at its flower end face.

2. Filter device according to claim 1, characterized in that the filtering member (34) comprises in a known manner a circumferentially perforated tube (36) which is closed at its end face facing the open end face of the shielding tube (32) and is at least in the area in which the liquid flows into the shielding tube (32) enclosed by a filter mantle (40).

3. Filter device according to claims 1 or 2, characterized in that the jacket of the container (10) extends beyond the bottom (12) of the latter, and, in particular, a closeable opening is arranged in the center of the bottom (12).

**Revendications**

1. Appareil de filtration pour le traitement d'eau brute, comportant un récipient (10) rempli d'un milieu filtrant (30) et traversé par l'eau à traiter, qui présente un orifice d'alimentation (26) et un orifice d'évacuation se trouvant sur la face supérieure du récipient, comportant un tube de blindage (32) s'étendant à l'intérieur du récipient (10) du haut vers le bas et se terminant à distance du fond dudit récipient, et comportant un organe filtrant (34) cylindriquement creux, agencé dans celui-ci coaxialement et à distance radiale, perméable radialement sur sa longueur, dont l'espace interne est relié d'un côté à l'orifice d'évacuation pour évacuer l'eau purifiée et dont l'extrémité libre se trouve à l'intérieur de la partie terminale inférieure du tube de blindage, conformée pour être perméable, caractérisé en ce que le milieu filtrant est une masse échangeuse d'ions (30) et en ce que le tube de blindage (32) n'est ouvert qu'à son extrémité frontale inférieure.

2. Appareil de filtration selon la revendication 1, caractérisé en ce que l'organe filtrant (34) présente, de façon connue, un tube perforé à sa périphérie, fermé à son extrémité frontale tournée vers l'extrémité frontale du tube de blindage (32) et entouré, au moins dans la zone d'entrée du liquide dans le tube de blindage (32) d'un manchon filtrant (40).

3. Appareil de filtration selon l'une des revendications 1 ou 2, caractérisé en ce que la surface périphérique du récipient (10) s'étend au-delà du fond (12) de celui-ci et que, spécialement au centre du fond (12) est aménagée une ouverture obturable.

Fig. 1

# Fig. 2